# EUROPÄISCHE PATENTSCHRIFT

(11) **EP 1 336 037 B1**
(45) Veröffentlichungstag und Bekanntmachung des Hinweises auf die Patenterteilung: **01.03.2006**
(21) Anmeldenummer: 01993751.5
(22) Anmeldetag: 10.10.2001
(51) Int. Cl.: F02D 41/02, F01N 3/023, F01N 9/00, F02D 41/40

(54) **VERFAHREN UND VORRICHTUNG ZUR STEUERUNG EINES ABGASNACHBEHANDLUNGSSYSTEMS**
METHOD AND DEVICE FOR CONTROLLING AN EXHAUST GAS AFTERTREATMENT SYSTEM
PROCEDE ET DISPOSITIF POUR REGULER UN SYSTEME DE TRAITEMENT SUBSEQUENT DE GAZ D'ECHAPPEMENT

(30) Priorität: 11.11.2000 DE 10056016
(43) Veröffentlichungstag der Anmeldung: 20.08.2003
(73) Patentinhaber: ROBERT BOSCH GMBH, 70442 Stuttgart (DE)
(72) Erfinder: SCHALLER, Johannes, 71229 Leonberg (DE); WEBER, Georg, 74336 Brackenheim-Stockheim (DE); HARNDORF, Horst, 34270 Schauenburg (DE); KHATCHIKIAN, Peter, 03044 Cottbus (DE)
(86) Internationale Anmeldenummer: PCT/DE2001/003884
(87) Internationale Veröffentlichungsnummer: WO 2002/038932

(56) Entgegenhaltungen:
- EP-A- 1 130 227
- DE-A- 19 746 855
- DE-A- 19 906 287
- FR-A- 2 774 421
- US-A- 4 685 290

## Beschreibung

### Stand der Technik

Die Erfindung betrifft ein Verfahren und eine Vorrichtung zur Steuerung eines Abgasnachbehandlungssystems, insbesondere bei einer Brennkraftmaschine.

Ein Verfahren und eine Vorrichtung zur Steuerung eines Abgasnachbehandlungssystems einer Brennkraftmaschine sind beispielsweise aus der DE 199 06 287 bekannt. Dort beinhaltet das Abgasnachbehandlungssystem wenigstens ein Partikelfilter, der insbesondere bei direkteinspritzenden Brennkraftmaschinen eingesetzt wird. Bei diesem Verfahren wird eine Zustandsgröße, die den Zustand des Abgasnachbehandlungssystems charakterisiert, erfasst. Beim Stand der Technik handelt es sich hierbei um die Beladung des Partikelfilters. Überschreitet diese Zustandsgröße, d. h. die Beladung des Partikelfilters, bestimmte Werte, leitet die Vorrichtung einen Sonderbetriebszustand ein, bei dem der Partikelfilter durch geeignete Maßnahmen regeneriert wird. Insbesondere ist vorgesehen, dass zusätzlich Kraftstoff in den Abgastrakt gelangt, der in einem Oxidationskatalysator oxidiert wird, um die Abgastemperatur zu erhöhen.

Nach der **US-A-4 685 290** wird ein Filter regeneriert, wenn der Zustand des Filters -festgestellt anhand eines Drucksensor-Signals, eines Signals für eine Zustandsgröße des Abgasbehandlungssystems - dies erfordert. Der Sonderbetriebszustand der Regenration umfaßt die Phase 1, Vorwärmen und die Phase 2, Regenration, wobei zumindest zeitweise die Temperatur gesteuert /geregelt wird.

Im Vorheiz - Zustand wird durch Einspritzen nahe dem UT unverbrannter Kartstoff dem Filter zugeführt, das Vorheizen wird dann auf Regeneration (ohne unverbrannten Kraftstoff) umgeschaltet.

Zur Einleitung und/oder zur Durchführung der Regeneration des Partikelfilters wird zusätzlicher Kraftstoff benötigt, der entweder mittels einer zusätzlichen Zumesseinrichtung im Abgastrakt oder mittels der üblichen Stellglieder zur Kraftstoffeinspritzung zugemessen wird. Nachteilig ist, dass die Regeneration den Kraftstoffverbrauch erhöht. Desweiteren ist es möglich, dass sich die Abgastemperatur im Partikelfilter aufgrund der Regeneration auf unzulässig hohe Werte erhöht.

### Vorteile der Erfindung

Dadurch, dass die Temperatur im Abgasnachbehandlungssystem, insbesondere im Partikelfilter, abhängig vom Zustand des Abgasnachbehandlungssystems und dem Zustand der Brennkraftmaschine auf einen Wert gesteuert oder geregelt wird, kann der Kraftstoffmehrverbrauch im Sonderbetriebszustand deutlich reduziert werden. Desweiteren können für den Sonderbetriebszustand notwendigen Temperaturen sicher eingehalten werden. Temperaturabweichungen zu kleinen oder zu großen Werten treten nicht auf.

Hierzu erfolgt eine Steuerung der Temperatur des Abgasnachbehandlungssystems, insbesondere der Temperatur vor dem Partikelfilter, in Abhängigkeit des Zustandes des Abgasnachbehandlungssystems und der Brennkraftmaschine. Dabei erfolgt bei einer Ausgestaltung keine Rückkopplung der tatsächlichen Temperatur vor dem Partikelfilter, sondern es wird lediglich auf die Temperatur vor dem Partikelfilter geschlossen oder anhand anderer Kriterien entschieden, ob die Regeneration zu beenden ist. Insbesondere wird die Temperatur vor dem Oxidationskatalysator, die der Abgastemperatur der Brennkraftmaschine entspricht, als wesentliche Größe berücksichtigt. Diese Größe kann sowohl gemessen und besonders vorteilhaft aus anderen Betriebskenngrößen, wie Last und Drehzahl bestimmt werden.

Besonders vorteilhaft ist eine Ausführungsform, bei der die Steuerung derart ausgebildet ist, dass die Temperatur vor dem Partikelfilter gemessen und mit dem Sollwert verglichen, und ausgehend von diesem Vergleich die zusätzliche Kraftstoffmenge bestimmt wird.

Gemäss den unabhängigen Ansprüchen 1 und 7 wird bei einem Gegenstand nach Anspruch 1 und 7 erster Teil der Sonderbetriebszustand in wenigstens zwei Phasen aufgeteilt, es nimmt in einer ersten Phase die Menge an unverbranntem Kraftstoff im Abgas im Laufe der Zeit zu. In einer zweiten Phase nimmt die Menge an unverbrannten Kraftstoff im Abgas vor dem Oxidationskatalysator einen konstanten Wert an.

Durch diese Vorgehensweise kann erreicht werden, dass die Temperatur gemäß einer erwünschten Funktion, das heißt nicht zu schnell und nicht zu langsam ansteigt. Vorzugsweise ist vorgesehen, dass die Temperatur einen konstanten Wert annimmt, oder die Steuergrößen werden so nachgeführt, dass die Temperatur vor dem Partikelfilter auch bei variablem Betriebszustand der Brennkraftmaschine konstant bleibt. Bei einem zu langsamen Anstieg, dauert der Sonderbetriebszustand zu lange. Bei einem zu schnellen Anstieg kann der Partikelfilter beschädigt werden, und es kann unverbrannter Kraftstoff in die Umgebung gelangen.

Dadurch, dass die Dauer der ersten und/oder der zweiten Phase vorgegeben wird, kann die zusätzliche Kraftstoffmenge sehr gut an den aktuellen Betriebszustand angepasst werden.

Dadurch dass die zweite Phase endet, wenn die Regeneration beginnt, kann einerseits die Regeneration beschleunigt und anderseits der Verbrauch an Kraftstoff weiter minimiert werden.

Besonders vorteilhaft ist eine Weiterbildung, bei der in einer dritten Phase die Menge an unverbranntem Kraftstoff zeitweise auf den konstanten Wert, vorzugsweise uaf den Wert der zweiten Phase gesetzt wird.

### Zeichnung

Die Erfindung wird nachstehend anhand der in der Zeichnung dargestellten Ausführungsformen erläutert. Es zeigt Figur 1 ein Blockdiagramm der erfindungsgemäßen Vorrichtung, Figur 2 ein Flussdiagramm des erfindungsgemäßen Verfahrens und Figur 3 den zeitlichen Verlauf der Mehrmenge.

### Beschreibung der Ausführungsbeispiele

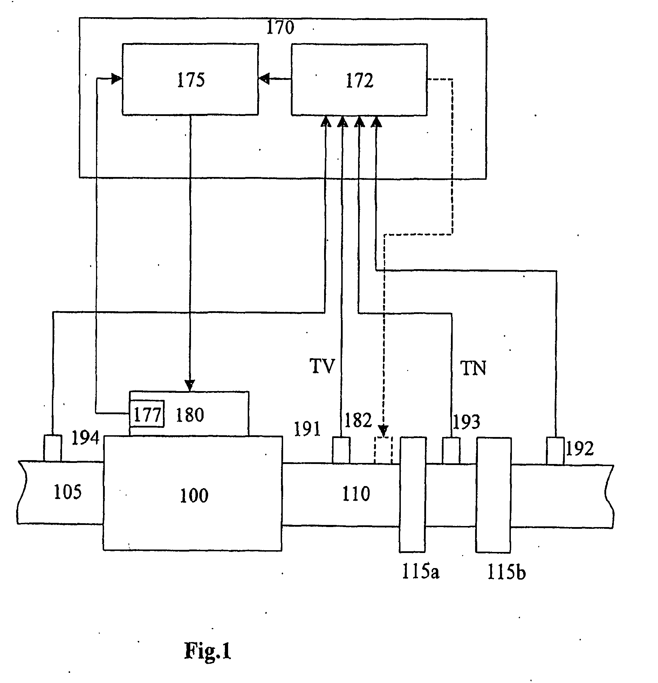

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet, das in der dargestellte Ausführungsform einen Katalysator 115a und einen Partikelfilter 115b beinhaltet. Desweiteren ist es möglich, dass mehrere Katalysatoren für unterschiedliche Schadstoffe oder Kombinationen von wenigstens einem Katalysator und einem Partikelfilter vorgesehen sind.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 beaufschlagt die Motorsteuereinheit 175 und bei einer Ausgestaltung ein Stellelement 182, das in der Abgasleitung vor dem Abgasnachbehandlungssystem oder im Abgasnachbehandlungssystem angeordnet ist, mit Ansteuersignalen.

Desweiteren sind verschiedene Sensoren vorgesehen, die die Abgasnachbehandlungssteuereinheit und die Motorsteuereinheit mit Signalen versorgen. So ist wenigsten ein erster Sensor 194 vorgesehen, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren. Wenigsten ein dritter Sensor 191 liefert Signale, die den Zustand des Abgases vor dem Abgasnachbehandlungssystem charakterisieren. Wenigsten ein vierter Sensor 193 liefert Signale, die den Zustand des Abgasnachbehandlungssystems 115 charakterisieren. Desweiteren liefert wenigstens ein Sensor 192 Signale, die den Zustand der Abgase nach dem Abgasnachbehandlungssystem charakterisieren. Vorzugsweise werden Sensoren, die Temperaturwerte und/oder Druckwerte erfassen verwendet. Desweiteren können auch Sensoren eingesetzt werden, die die chemische Zusammensetzungen des Abgases und/oder der Frischluft charakterisieren. Hierbei handelt es sich bspw. um Lambdasensoren, NOX-Sensoren oder HC-Sensoren.

Mit den Ausgangssignalen des ersten Sensors 194, des dritten Sensors 191, des vierten Sensors 193 und des fünften Sensors 192 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind. Desweiteren ist bei Systemen einsetzbar, die lediglich mit einem oder mehreren Katalysatoren und/oder einem oder mehreren Speicherelementen für gasförmige Abgasbestandteile ausgestattet sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. anhand verschiedener Sensorsignale erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperatur- und/oder verschiedenen Druckwerten zu ermitteln. Desweiteren können noch weiter Größen zur Berechnung oder Simulation des Beladungszustands herangezogen werden. Eine entsprechende Vorgehensweise ist bspw.. aus der DE 199 06 287 bekannt.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 182 dem Abgas zugeführt werden, die dann eine entsprechende Reaktion im Abgasnachbehandlungssystem 115 hervorrufen: Diese zusätzlich zugemessenen Stoffe bewirken unter anderem eine Temperaturerhöhung und/oder eine Oxidation der Partikel im Partikelfilter. So kann bspw. vorgesehen sein, dass mittels des Stellelements 182 Kraftstoffstoff und/oder Oxidationsmittel zugeführt werden.

Bei einer Ausgestaltung kann vorgesehen sein, dass ein entsprechendes Signal an die Motorsteuereinheit 175 übermittelt wird und diese eine so genannte Nacheinspritzung, insbesondere eine eine späte Nacheinspritzung, durchführt. Mittels der Nacheinspritzung ist es möglich, gezielt Kohlenwasserstoffe in das Abgas einzubringen, die über eine Temperaturerhöhung zur Regeneration des Abgasnachbehandlungssystems 115 beitragen.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet.

Bei der dargestellten Ausführungsform beinhaltet das Abgasnachbehandlungssystem 115 eine Oxidationskatalysator 115a sowie einen nachgeschalteten Partikelfilter 115b. Die Temperatur TV vor dem Katalysator wird vorzugsweise mit dem Sensor 191 erfasst. Die Temperatur TN nach dem Katalysator, die der Temperatur vor dem Partikelfilter entspricht, wird mittels des Sensors 193 erfasst. Desweiteren ist ein Sensor 192 vorgesehen, der den Differenzdruck zwischen dem Ein- und Ausgang des Partikelfilters 115b ermittelt. Desweiteren ist eine Einrichtung 182 vorgesehen, die Kraftstoff in den Abgastrakt, insbesondere in die Abgasleitung 110 vor dem Oxidationskatalysator, einbringt. Alternativ hierzu kann auch vorgesehen sein, dass durch geeignete Ansteuerung des Stellglieds 180 Kraftstoff über die Brennräume in den Abgastrakt gelangt. Wesentlich ist, dass unverbrannter Kraftstoff in den Oxidationskatalysator gelangt. Dabei wir auch unvollständig verbrannter Kraftstoff, der im Oxidationskatalysator umgesetzt werden kann, als unverbrannter Kraftstoff bezeichnet.

Die verschiedenen Größen bezüglich der Temperatur und der Druckdifferenz können mit den dargestellten Sensoren erfasst oder von der Steuereinheit 170 ausgehend von anderen Messwerten und/oder Ansteuersignalen, die in der Steuereinheit 170 vorliegen, berechnet und/oder simuliert werden.

Die in den Abgastrakt eingebrachte Kraftstoffmenge reagiert in dem Oxidationskatalysator und wird dort vorzugsweise in einer flammenfreien Verbrennung verbrannt. Dies führt zu einer Erhöhung der Temperatur nach dem Oxidationskatalysator 115a. Erfindungsgemäß wird eine solche Kraftstoffmenge zugemessen, dass die Temperatur sich auf einen solchen Wert erhöht, der für die Regeneration des Partikelfilters erforderlich ist. Die Regeneration des Partikelfilters erfolgt bei Temperaturen oberhalb eines bestimmten Werts, der in Abhängigkeit von der Ausgestaltung des Abgasnachbehandlungssystems und der Beschaffenheit der Partikelschicht im Filter zwischen ca. 300°C und ca. 650°C liegt.

Bei zu hohen Abgastemperaturen kann der Fall eintreten, dass der Partikelfilter durch Überhitzung geschädigt wird. Es ist insbesondere problematisch, wenn eine große Partikelmenge im Filter umgesetzt und dies zu einer weiteren Temperaturerhöhung führt. Ist andererseits die Abgastemperatur zu gering und/oder der Gasvolumenstrom im Abgas zu groß, so wird nur ein Teil des Kraftstoffes im Oxidationskatalysator umgesetzt und der Rest gelangt unverbrannt in die Umwelt.

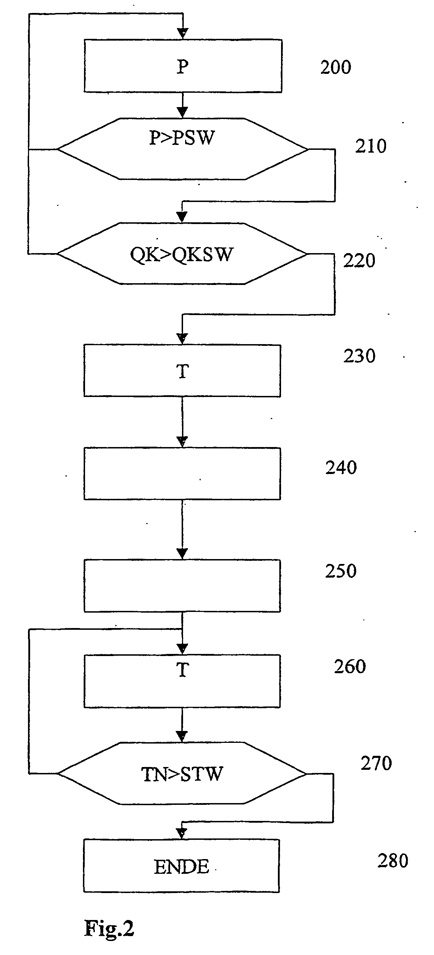

Im Folgenden wird die erfindungsgemäße Vorgehensweise anhand des Flussdiagrammes gemäß der Figur 2 beschrieben. In einem ersten Schritt 200 wird der Beladungszustand des Partikelfilters bestimmt, d. h. es wird eine Zustandsgröße P, die den Zustand des Abgasnachbehandlungssystems charakterisiert, ermittelt. Diese Zustandsgröße charakterisiert die im Partikelfilter 115b angesammelte Rußmasse. Die Bestimmung der Zustandsgröße P kann auf unterschiedliche Weise erfolgen. So kann beispielsweise vorgesehen sein, dass die Zustandsgröße ausgehend von verschiedenen Betriebsparametern der Brennkraftmaschine und weiteren Größen simuliert wird. So kann beispielsweise die Zustandsgröße ausgehend von der eingespritzten Kraftstoffmenge, der Drehzahl und weiteren Größen, über die Zeit aufintegriert werden. Hierzu wird die erzeugte Rußmasse für jeden Betriebspunkt aus einem Kennfeld ausgelesen und aufsummiert. Bei einer weiteren bevorzugten Ausführungsform wird der Druckverlust über den Partikelfilter gemessen. Hierzu wird vorzugsweise ein Differenzdrucksensor eingesetzt, der eine Druckgröße liefert, die dem Differenzdruck zwischen Ein- und Ausgang des Partikelfilters entsprecht.

Die anschließende Abfrage 210 überprüft, ob die Zustandsgröße P größer als ein Schwellenwert PSW ist. In diesem Fall ist eine Regeneration des Partikelfilters erforderlich. Ist dies nicht der Fall, so erfolgt erneut Schritt 200.

Ist eine Regeneration erforderlich, so folgt die Abfrage 210. Die Abfrage 210 überprüft, ob ein Betriebspunkt vorliegt, der günstig für eine Regeneration ist. Günstige Betriebspunkte sind Betriebspunkte, bei denen die Abgastemperatur nicht zu kleine Werte und der Gasstrom nicht zu große Werte annimmt. Solche Betriebspunkte liegen vorzugsweise vor, wenn die eingespritzte Kraftstoffmenge große Werte annimmt, so wird in der einfachsten Ausführungsform überprüft, ob die Kraftstoffmenge QK, die eingespritzt wird, größer als ein Schwellenwert QKSW ist. Ferner kann vorgesehen sein, dass überprüft wird, ob der Quotient aus eingespritzter Kraftstoffmenge QK und dem Gasstrom größer als ein Schwellenwert ist. Ist dies nicht der Fall, folgt erneut Schritt 200.

Ist der Betriebspunkt günstig, so folgt der Schritt 230, in dem die Regeneration eingeleitet wird. Alternativ zu den Abfragen 210 und 220 können auch andere Vorgehensweisen verwendet werden, um zu entscheiden, ob eine Regeneration durchzuführen ist. Insbesondere kann vorgesehen sein, dass die beiden Abfragen 210 und 220 in ihrer zeitlichen Reihenfolge vertauscht sein können. Desweiteren kann vorgesehen sein, dass weitere Abfragen vorgesehen sind, so z.B. dass bei einer Teilbeladung eine Regeneration nur dann erfolgt, wenn der Betriebspunkt günstig ist. Erreicht die Zustandsgröße einen Wert der wesentlich über dem Schwellwert für die Zustandsgröße liegt, so erfolgt die Einleitung der Regeneration unabhängig vom Betriebspunkt.

In dem Schritt 230 wird die Temperatur TV vor dem Oxidationskatalysator ermittelt. Die Temperatur TV ist hierzu in einem Kennfeld abhängig von verschiedenen Betriebsparametern der Brennkraftmaschine abgelegt. Besonders vorteilhaft ist es, wenn hierbei die Drehzahl N und die Motorlast berücksichtigt werden. Als Lastgröße wird insbesondere die einzuspritzende Kraftstoffmenge verwendet. Besonders vorteilhaft ist es, wenn diese aus dem Kennfeld ausgelesene Größe zur Kompensation der Einflüsse von Außentemperatur und Fahrtwindabkühlung mittels Korrekturfaktoren korrigiert wird. Die Korrekturfaktoren werden dabei abhängig von der Außentemperatur und/oder der Fahrgeschwindigkeit des Fahrzeugs vorgegeben. Vorteilhaft ist, dass alle diese Größen in der Steuereinheit 175 zur Verfügung stehen, und daher keine zusätzlichen Sensoren erforderlich sind.

Im anschließenden Schritt 240 wird der Dosierverlauf festgelegt. Der Dosierverlauf ist durch die zeitliche Abhängigkeit der zusätzlich zugemessenen Kraftstoffmenge QZ definiert. Vorzugsweise ist vorgesehen, dass während der Dosierung wenigstens zwei Phasen vorgesehen sind. In einer ersten Phase steigt die zusätzliche Menge QZ von dem Wert 0 auf einen konstanten Wert QKZ. Vorzugsweise ist vorgesehen, dass der Anstieg gemäß einer Parabel erfolgt. Alternativ kann auch vorgesehen sein, dass ein linearer Anstieg vorgesehen ist. Der konstante Wert QKZ, auf den die zusätzliche Kraftstoffmenge erhöht wird, wird vorzugsweise ausgehend von der Temperatur TV vor dem Katalysator, der Drehzahl N und der Last der Brennkraftmaschine bestimmt. Dies bedeutet ausgehend von diesen Größen, d. h. der Temperatur vor dem Katalysator der gewünschten Temperatur nach dem Katalysator und weiteren Betriebskenngrößen wie der Drehzahl und der Last, wird die zusätzliche Kraftstoffmenge QZ bestimmt. Diese Bestimmung erfolgt vorzugsweise mittels eines Kennfeldes. Besonders vorteilhaft ist es, wenn die Anfangssteigung des Anstiegs und damit die Dauer des Anstiegs abhängig von der Temperatur vor dem Katalysator vorgebbar ist.

In einer weiteren Ausgestaltung der Erfindung wird die Dosiermenge nach Ablauf der ersten Phase so eingestellt, das die Abgastemperatur vor dem Partikelfilter auch dann konstant bleibt, wenn sich der Betriebszustand der Brennkraftmaschine ändert.

In Schritt 250 wird dann die zusätzliche Kraftstoffmenge mit dem vorgegebenen Dosierverlauf zugemessen. Die zusätzliche Kraftstoffmenge QZ kann zum einen unmittelbar dem Abgastrakt zugeführt werden, alternativ kann auch vorgesehen sein, dass die Kraftstoffmenge mittels des für die Kraftstoffzumessung verwendeten Stellglieds zugemessen wird.

In Schritt 260 wird die Temperatur TV vor dem Katalysator laufend ermittelt. Vorzugsweise wird hier ebenfalls ein Kennfeld oder ein Sensor verwendet. Ändert sich die Temperatur vor dem Katalysator, wird die zusätzlich einzuspritzende Kraftstoffmenge QZ entsprechend neu berechnet und korrigiert.

Die anschließende Abfrage 270 überprüft, ob die Haltezeit abgelaufen ist, d.h. die Abfrage überprüft, ob ausreichend lange zusätzlich Kraftstoff zugeführt wird. Zur Realisierung dieser Abfrage stehen mehrere Ausführungsformen zur Verfügung.

In einer ersten einfachen Realisierung ist vorgesehen, dass die Regeneration nach einer vorgegebenen Zeitdauer beendet wird. Dabei kann eine fest vorgegebene Zeitdauer oder eine abhängig vom Betriebszustand der Brennkraftmaschine vorgebbare Zeitdauer gewählt werden. So wird zusätzlich in Schritt 240 ein Zeitzähler auf 0 gesetzt und in Abfrage 270 überprüft, ob der Zeitzähler einen vorgegebenen Wert überschritten hat.

Bei einer weiteren Ausgestaltung ist vorgesehen, dass die Zumessung des zusätzlichen Kraftstoffes beendet oder unterbrochen wird, wenn die Regeneration des Partikelfilters begonnen hat. Hierzu ist es erforderlich, dass die einsetzende Regeneration im Partikelfilter erkannt wird. Dies kann beispielsweise dadurch erfolgen, dass die Temperatur TN vor dem Partikelfilter und die Temperatur nach dem Partikelfilter ausgewertet wird. Ist die Temperatur nach dem Partikelfilter größer als die Temperatur vor dem Partikelfilter, so ist von einer beginnenden Regeneration auszugehen, da diese zu einer Temperaturerhöhung führt. Durchläuft die Temperatur nach dem Filter kurz nach Beginn der Haltezeit ein Maximum, so hat der Rußabbrand eingesetzt. Erfindungsgemäß wird deshalb überprüft, ob die Temperatur nach dem Filter größer als vor dem Filter ist und abhängig von dieser Abfrage entschieden, dass die Haltezeit abgelaufen ist. Zur Auswertung der Temperatur kann eine Korrektur vorgesehen sein, die die Wärmeabgabe des Partikelfilters an die Umgebung, insbesondere die Wärmeabstrahlung, berücksichtigt.

Alternativ zu dem Temperatursensor können auch andere Sensoren, wie beispielsweise ein Differenzdrucksensor, der die Druckdifferenz vor und nach dem Partikelfilter mißt, oder ein Sensor, der die Abgaszusammensetzung vor und nach dem Partikelfilter erfasst. Hierzu ist besonders ein sogenannter Lambdasensor geeignet, der die Sauerstoffkonzentration im Abgas erfasst. Ist die Sauerstoffkonzentration nach dem Partikelfilter kleiner als vor dem Partikelfilter, ist ebenfalls von einer beginnenden Regeneration auszugehen.

Unvorteilhaft bei dieser Vorgehensweise ist, dass während der Zumessung von Kraftstoff die Umsetzung von motorisch erzeugten NO zu NO₂ unterdrückt wird. Wird die Zumessung zusätzlichen Kraftstoffs unterbunden oder unterbrochen, wird im Oxidationskatalysator wieder NO₂ gebildet, dass im Partikelfilter mit den Partikeln reagiert und zu einem zusätzlichen Partikelabbau führt.

Besonders vorteilhaft ist es, wenn nach Abschaltung der zusätzlichen Kraftstoffzumessung diese wieder periodisch ein- und ausgeschaltet wird. Dadurch kann ein Abfall der Temperatur während der Regeneration verhindert werden.

Bei der in Figur 2 dargestellten Ausführungsform erfolgt eine Steuerung der Temperatur des Abgasnachbehandlungssystems, insbesondere der Temperatur vor dem Partikelfilter, in Abhängigkeit des Zustandes des Abgasnachbehandlungssystems, der Brennkraftmaschine und der Partikelschicht. Dabei erfolgt keine Rückkopplung der tatsächlichen Temperatur vor oder nach dem Partikelfilter, sondern es wird lediglich anhand anderer Kriterien entschieden, ob die Regeneration zu beenden ist. Insbesondere wird die Temperatur vor dem Oxidationskatalysator, die der Abgastemperatur der Brennkraftmaschine entspricht, als wesentliche Größe berücksichtigt. Diese Größe kann sowohl gemessen und besonders vorteilhaft aus anderen Betriebskenngrößen, wie Last und Drehzahl bestimmt werden.

Besonders vorteilhaft ist eine Ausführungsform, bei der die Steuerung derart ausgebildet ist, dass die Temperatur vor dem Partikelfilter gemessen und mit dem Sollwert verglichen, und ausgehend von diesem Vergleich die zusätzliche Kraftstoffmenge bestimmt wird.

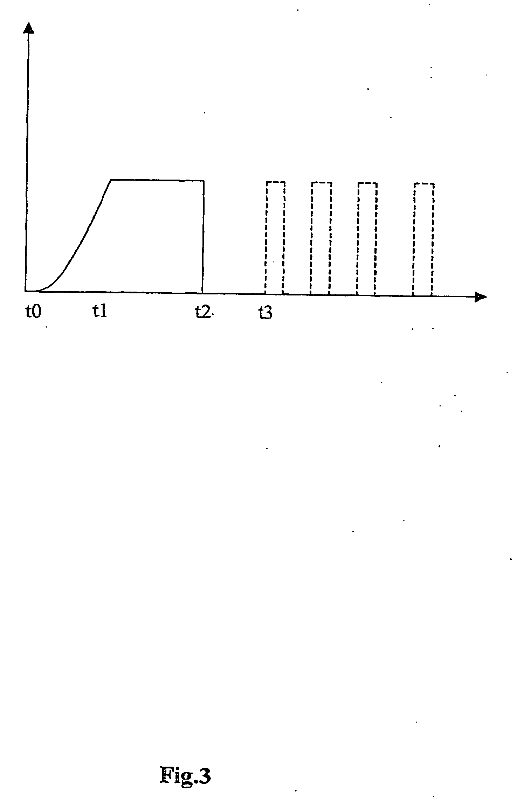

In Figur 3 ist der zeitliche Verlauf der zusätzlichen Menge QZ, die zur Regeneration zugemessen wird beispielhaft dargestellt. In einer ersten Phase zwischen den Zeitpunkten t1 und t2 steigt die Mehrmenge von Null auf einen konstanten Wert QKZ an. Bis zu dem Zeitpunkt t2 wird diese konstante Menge QKZ zugemessen, wenn der Betriebspunkt konstant ist. Ändert sich der Betriebspunkt, wird die Dossiermenge vorzugsweise so angepasst, das die Abgastemperatur vor dem Partikelfilter konstant bleibt. Zum Zeitpunkt t2 ist die Haltezeit abgelaufen und die Mehrmenge wird auf Null reduziert.

Bei einer besonders vorteilhaften Ausgestaltung, die gestrichtelt dargestellt ist, wird ab dem Zeitpunkt t3 kurzzeitig die Mehrmenge auf den konstanten Wert gesetzt.

## Patentansprüche

1. Verfahren zur Steuerung eines Abgasnachbehandlungssystems, insbesondere bei einer Brennkraftmaschine, bei dem wenigstens eine Zustandsgröße, die den Zustand des Abgasnachbehandlungssystems charakterisiert, ermittelt wird, wobei abhängig von der Zustandsgröße ein Sonderbetriebszustand eingeleitet wird, wobei die Temperatur des Abgasnachbehandlungssystems abhängig vom Zustand des Abgasnachbehandlungssystems und/oder der Brennkraftmaschine gesteuert oder geregelt wird, wobei dem Abgas unverbrannter Kraftstoff zugeführt wird, **dadurch gekennzeichnet, dass** in einer ersten Phase die Menge an unverbranntem Kraftstoff im Abgas im Laufe der Zeit zunimmt und in einer zweiten Phase die Menge an unverbranntem Kraftstoff im Abgas einen konstanten Wert annimmt.

2. Verfahren nach Anspruch 1, **dadurch gekennzeichnet, dass** die Dauer der ersten und/oder der zweiten Phase vorgegeben wird.

3. Verfahren nach einem der vorhergehenden Ansprüche, **dadurch gekennzeichnet, dass** die zweite Phase endet, wenn die Regeneration beginnt.

4. Verfahren nach einem der vorhergehenden Ansprüche, **dadurch gekennzeichnet, dass** in einer dritten Phase die Menge an unverbranntem Kraftstoff zeitweise auf den konstanten Wert gesetzt wird.

5. Verfahren nach einem der vorhergehenden Ansprüche, **dadurch gekennzeichnet, dass** der konstante Wert abhängig von der Drehzahl der einzuspritzenden Kraftstoffmenge und/oder der Temperatur vor dem Abgasnachbehandlungssystem vorgebbar ist.

6. Verfahren nach einem der vorhergehenden Ansprüche, **dadurch gekennzeichnet, dass** der Beginn der Regeneration anhand der Temperatur und/oder der Abgaszusammensetzung vor und nach dem Abgasnachbehandlungssystems erkannt wird.

7. Vorrichtung zur Steuerung eines Abgasnachbehandlungssystems, insbesondere bei einer Brennkraftmaschine, bei dem wenigstens eine Zustandsgröße, die den Zustand des Abgasnachbehandlungssystems charakterisiert, ermittelt wird, wobei abhängig von der Zustandsgröße ein Sonderbetriebszustand eingeleitet wird, wobei Mittel vorgesehen sind, die die Temperatur des Abgasnachbehandlungssystems abhängig vom Zustand des Abgasnachbehandlungssystems und/oder der Brennkraftmaschine steuern oder regeln, Mittel vorgesehen sind, die dem Abgas unverbrannten Kraftstoff zuführen, **dadurch gekennzeichnet dass** in einer ersten Phase die Menge an unverbranntem Kraftstoff im Abgas im Laufe der Zeit zunimmt und in einer zweiten Phase die Menge an unverbranntem Kraftstoff im Abgas einen konstanten Wert annimmt.

## Claims

1. Method for controlling an exhaust gas aftertreatment system, in particular for an internal combustion engine, in which at least one state variable, which characterizes the state of the exhaust gas aftertreatment system, is determined, a special operating state being initiated as a function of the state variable, the temperature of the exhaust gas aftertreatment system being controlled as a function of the state of the exhaust gas aftertreatment system and/or of the internal combustion engine, with unburnt fuel being fed to the exhaust gas, **characterized in that** in a first phase the quantity of unburnt fuel in the exhaust gas increases over the course of time, and in a second phase the quantity of unburnt fuel in the exhaust gas adopts a constant level.

2. Method according to Claim 1, **characterized in that** the duration of the first phase and/or the second phase is predetermined.

3. Method according to one of the preceding claims, **characterized in that** the second phase ends when the regeneration begins.

4. Method according to one of the preceding claims, **characterized in that** in a third phase the quantity of unburnt fuel is temporarily set to the constant level.

5. Method according to one of the preceding claims, **characterized in that** the constant level can be predetermined as a function of the engine speed, the fuel quantity to be injected and/or the temperature upstream of the exhaust gas aftertreatment system.

6. Method according to one of the preceding claims, **characterized in that** the start of the regeneration is recognized on the basis of the temperature and/or the exhaust gas composition upstream and downstream of the exhaust gas aftertreatment system.

7. Apparatus for controlling an exhaust gas aftertreatment system, in particular for an internal combustion engine, in which at least one state variable, which characterizes the state of the exhaust gas aftertreatment system, is determined, a special operating state being initiated as a function of the state variable, means being provided which control the temperature of the exhaust gas aftertreatment system as a function of the state of the exhaust gas aftertreatment system and/or of the internal combustion engine, means being provided which feed unburnt fuel to the exhaust gas, **characterized in that** in a first phase the quantity of unburnt fuel in the exhaust gas increases over the course of time, and in a second phase the quantity of unburnt fuel in the exhaust gas adopts a constant level.

## Revendications

1. Procédé de commande d'un système de post-traitement de gaz d'échappement, en particulier dans un moteur à combustion interne, selon lequel on détermine au moins une variable d'état qui caractérise l'état du système de post-traitement de gaz d'échappement, on déclenche un mode de fonctionnement particulier en fonction de la variable d'état, la température du système de traitement de gaz d'échappement étant commandée ou régulée en fonction de l'état du système de post-traitement de gaz d'échappement et/ou du moteur à combustion interne, en envoyant du carburant non brûlé dans les gaz d'échappement,
**caractérisé en ce que**
la quantité de carburant non brûlé présente dans les gaz d'échappement augmente au cours du temps lors d'une première phase, et lors d'une seconde phase on maintient la quantité de carburant non brûlé présente dans le gaz d'échappement à une valeur constante.

2. Procédé selon la revendication 1,
**caractérisé en ce que**
la durée de la première et/ou de la deuxième phase est prédéfinie.

3. Procédé selon l'une quelconque des revendications précédentes,
**caractérisé en ce que**
la deuxième phase s'arrête quand la régénération commence.

4. Procédé selon l'une quelconque des revendications précédentes,
**caractérisé en ce que**
lors d'une troisième phase, la quantité de carburant non brûlé est périodiquement réglée sur la valeur constante.

5. Procédé selon l'une quelconque des revendications précédentes,
**caractérisé en ce que**
la valeur constante est prédéfinie en fonction du régime de la quantité de carburant à injecter et/ou de la température régnant avant le système de traitement de gaz d'échappement.

6. Procédé selon l'une quelconque des revendications précédentes,
**caractérisé en ce que**
le début de la régénération est reconnu au moyen de la température régnant, et/ou de la composition de gaz d'échappement se trouvant, avant et après le système de post-traitement subséquent de gaz d'échappement.

7. Dispositif de commande d'un système de post-traitement de gaz d'échappement, en particulier dans un moteur à combustion interne, dans lequel on détermine au moins une variable d'état qui caractérise l'état du système de post-traitement de gaz d'échappement, on déclenche un mode de fonctionnement particulier en fonction de la variable d'état, avec des moyens prévus pour commander ou réguler la température du système de post-traitement de gaz d'échappement en fonction de l'état du système de traitement subséquent de gaz d'échappement et/ou du moteur à combustion interne, et avec des moyens prévus pour envoyer du carburant non brûlé dans les gaz d'échappement,
**caractérisé en ce que**
la quantité de carburant non brûlé présente dans le gaz d'échappement augmente au cours du temps lors d'une première phase, et lors d'une deuxième phase on maintient la quantité de carburant non brûlé présente dans le gaz d'échappement à une valeur constante.
